# FASCICULE DE BREVET EUROPEEN

(11) **EP 1 009 610 B1**
(45) Date de publication et mention de la délivrance du brevet: **11.12.2002**
(21) Numéro de dépôt: 98922848.1
(22) Date de dépôt: 17.04.1998
(51) Int. Cl.: B29C 45/14

(54) **PROCEDE ET DISPOSITIF DE FABRICATION D'UN RECIPIENT EQUIPE D'UNE ETIQUETTE**
VERFAHREN UND VORRICHTUNG ZUR HERSTELLUNG VON BEHÄLTER MIT ETIKETTE
METHOD AND DEVICE FOR MAKING A CONTAINER PROVIDED WITH A LABEL

(30) Priorité: 18.04.1997 FR 9705036
(43) Date de publication de la demande: 21.06.2000
(73) Titulaire: Potier-Muller, Colette (Heritiere de L'inventeur Decede), 98000 Monaco (MC)
(72) Inventeur: MULLER, Paul, A. +di, décédé (MC)
(74) Mandataire: Domange, Maxime
(86) Numéro de dépôt international: FR9800785
(87) Numéro de publication internationale: WO98047685

(56) Documents cités:
- EP-A- 0 331 596
- EP-A- 0 395 585
- CH-A- 638 718
- FR-A- 2 651 460
- GB-A- 1 357 532
- US-A- 3 602 496
- US-A- 5 614 146

## Description

La présente invention est relative à un procédé et un dispositif de fabrication par moulage d'un récipient équipé d'une étiquette d'habillage selon les préambules des revendications 1 et 8.

Le domaine technique de l'invention est celui de la fabrication par moulage d'un récipient en matière plastique.

L'invention s'applique particulièrement à un procédé de fabrication d'emballages en matière plastique qui sont revêtus d'une étiquette sur une partie d'au moins une de leur face, particulièrement d'une de leur face externe ; l'invention concerne plus particulièrement des emballages tels que des boites, des pots, des bouteilles ou des tubes (par exemple destinés à recevoir des produits gazeux, liquides ou pâteux notamment des produits alimentaires tels que du yaourt) dont le corps ou la structure sensiblement monobloc peut comporter une paroi formant un fond, et comporte une ou plusieurs parois latérales s'étendant par exemple selon une surface de révolution d'axe perpendiculaire au plan du fond, tel qu'un cylindre ou un tronc de cône; l'invention s'applique plus particulièrement à de tels emballages ou récipients de relativement petites dimensions, c'est-à-dire dont la plus grande dimension est inférieure à un mètre, par exemple de l'ordre de 5 à 30 cm.

L'invention s'applique à ce type d'emballage obtenu par moulage, généralement par injection de matières plastiques, dans un moule comportant au moins deux parties mobiles l'une par rapport à l'autre : une partie femelle ou matrice comportant au moins une empreinte en creux correspondant à la forme externe du récipient à fabriquer, et une partie mâle ou poinçon comportant au moins une empreinte en relief correspondant à la face interne du récipient à fabriquer.

L'invention s'applique à de tels emballages dont l'étiquette est solidarisée au corps en matière plastique, par adhérence obtenue par un surmoulage de l'étiquette, c'est-à-dire en introduisant l'étiquette dans le moule préalablement à l'introduction dans le moule de la matière plastique destinée à former le corps de l'emballage ; l'étiquette est de forme adaptée à la forme finale de l'emballage et est généralement obtenue à partir d'une feuille de papier ou de matière plastique tel que du polypropylène particulièrement, qui est découpée selon la forme voulue, et revêtue de motifs par tous procédés d'impression connus.

Habituellement, avant chaque cycle de moulage, une étiquette plane (c'est-à-dire disposée à plat) est transférée, par exemple par un système de pinces et/ou de ventouses, généralement à partir d'un magasin contenant une pile d'étiquettes, jusqu'au moule, selon deux techniques principales :
- une première technique utilise un outil (ou mandrin) de transfert qui est de forme adaptée pour pouvoir pénétrer à l'intérieur de la matrice du moule ; l'étiquette initialement plane est disposée autour du mandrin et est simultanément déformée pour épouser la forme externe du mandrin ; l'étiquette ainsi déformée est maintenue au contact de la face externe du mandrin par application de forces électrostatiques ou bien par création d'une dépression (par aspiration d'air) sur la face externe du mandrin de transfert, c'est-à-dire sous l'étiquette ; après déplacement du mandrin de transfert portant l'étiquette du magasin de stockage jusqu'à l'intérieur de la cavité ou empreinte de la matrice, les moyens (électrostatiques ou par dépression) de maintien de l'étiquette sur le mandrin sont désactivés ; l'étiquette qui tend à reprendre sa forme initiale plane, du fait de la relative raideur du ou des matériaux la constituant, se désolidarise du mandrin de transfert et vient au contact et épouse une partie au moins des faces de la cavité du moule formant l'empreinte ; après retrait du mandrin hors de la cavité et pénétration du poinçon (ou noyau) dans celle-ci, la matière plastique est introduite dans l'espace situé entre le poinçon et la matrice ainsi que dans l'espace situé entre le poinçon et l'étiquette, qui est alors plaquée contre les parois de la matrice sous l'effet des forces que la matière plastique injectée exerce sur elle ;
- le brevet FR2627744 (GIZEH SARL) décrit une autre technique de fabrication automatique de récipient avec étiquette d'habillage qui utilise pour le transfert des étiquettes du magasin au moule, deux pinces rotatives qui roulent l'étiquette en forme de cornet, l'étiquette ainsi roulée étant saisie par une pince de transfert qui insère l'étiquette dans la matrice du moule ; le roulage en cornet de l'étiquette par les pinces rotatives est obtenu en amenant les extrémités libres des étiquettes en recouvrement, l'étiquette roulée en cornet étant ensuite pincée au niveau du recouvrement de ses extrémités libres par la pince de transfert qui introduit l'étiquette ainsi roulée dans la matrice.

Ces techniques connues ont pour inconvénient de nécessiter généralement d'équiper la matrice de moyens d'aspiration pour maintenir en place l'étiquette dans l'empreinte jusqu'au moment de l'injection de la matière plastique.

Un autre inconvénient des procédés dans lesquels on utilise un mandrin de transfert, est le manque de précision dans le positionnement de l'étiquette sur le mandrin, et dans la déformation de l'étiquette pendant et après sa mise en place sur le mandrin de transfert ; cet inconvénient n'est pas résolu par le brevet français sus cité ; il en résulte par conséquent un manque de précision concernant le positionnement de l'étiquette dans la cavité du moule, ce qui conduit à la fabrication de récipients défectueux du fait du défaut de positionnement de l'étiquette.

Un autre inconvénient important est que la manipulation et le positionnement précis de l'étiquette par des pinces ou ventouses est impossible avec des étiquettes de très faible épaisseur, par exemple d'épaisseur inférieur à 80 microns ; en effet, des étiquettes aussi minces sont très fragiles et difficiles à manipuler, ayant tendance à se déformer et/ou se déplacer de manière non contrôlée sous l'effet de leur propre poids ou sous l'effet des contraintes mécaniques (que l'on recherche généralement à minimiser) provoquées par le contact mécanique des étiquettes avec les organes de manipulation, ou encore sous l'effet de forces électrostatiques ; en outre, leur faible épaisseur occasionne une raideur faible, qui peut être insuffisante pour permettre à l'étiquette de se désolidariser spontanément du mandrin ou autre moyen de transfert, ce qui peut empêcher ou tout au moins rendre plus difficile leur positionnement et leur maintien dans la cavité de la matrice ou bien qui nécessite à cet effet de leur appliquer des efforts de maintien par des moyens annexes tels que les moyens électrostatiques ou pneumatiques (par aspiration).

Le brevet CH 638 718 montre un procédé et un dispositif de moulage par injection d'un récipient équipé d'une étiquette d'habillage qui est introduite dans le moule avant injection, dans lesquels on forme l'étiquette et on solidarise au moins deux bords de l'étiquette, et dans lesquels on transfère l'étiquette sur une empreinte mâle du moule par des moyens mobiles.

Or il est intéressant dans certains cas et notamment pour réduire les coûts d'utiliser des étiquettes dont l'épaisseur est de l'ordre de 10 à 40 microns.

L'objectif de l'invention est donc de proposer un procédé et un dispositif de fabrication automatisé d'emballages ou récipients intégrant une étiquette, qui soient améliorés.

Un objectif primordial poursuivi par l'invention est de proposer de tels procédés et les dispositifs de mise en oeuvre correspondants qui permettent d'assurer des temps de cycle de fabrication d'emballages les plus courts possible ; en effet la durée d'injection (qui peut varier de quelques secondes à quelques minutes selon les dimensions de l'emballage notamment) est pénalisée par le (c'est-à-dire augmentée du) temps de transfert de l'étiquette dans le moule, qui lors de l'utilisation d'un mandrin peut être supérieur à 5 secondes.

De ce point de vue notamment, les systèmes de transfert d'étiquettes du magasin au moule qui utilisent des organes tels que mandrins ou pinces, outre le fait qu'ils conduisent à des réalisations mécaniques complexes et coûteuses (qui doivent au surplus être adaptées à la géométrie de chaque étiquette et donc être interchangeables pour pouvoir permettre la fabrication de plusieurs formes ou tailles de récipients différents), augmente le temps de cycle et ralentit le rythme de fabrication.

Les dispositifs de transfert qui comportent des moyens électrostatiques de maintien de l'étiquette sur un mandrin par exemple ont l'inconvénient, du fait de l'utilisation de tensions électriques pour faire adhérer les étiquettes par effet électrostatique sur les parties réceptrices des moyens de transfert, d'entraîner des perturbations électromagnétiques sur le fonctionnement du dispositif, et sont en outre incompatibles avec des films de faible épaisseur.

En outre, les dispositifs connus de transfert ne permettent pas ou sont inadaptés au positionnement des bords libres de l'étiquette en vis-à-vis de façon précise, c'est-à-dire bord à bord, et ce qui entraîne un désagrément tant esthétique que du point de vue de la fragilité du récipient obtenu.

Les problèmes sus cités sont encore accrus lorsque l'on souhaite utiliser les moules à plusieurs empreintes ; en effet l'utilisation de tels moules provoque des contraintes de conception (et d'utilisation) supplémentaires du fait de l'encombrement réduit qui est laissé libre entre deux empreintes consécutives pour assurer le transfert des étiquettes jusque dans le moule, et conduit à concevoir des systèmes complexes de transfert, le plus souvent au détriment du temps de transfert de l'étiquette du magasin jusqu'à la cavité du moule.

Conformément à un premier aspect, l'invention consiste à former une étiquette selon sa forme définitive ou bien selon une forme intermédiaire non plane, qui est donc tridimensionnelle ou volumique, à solidariser, par soudure et/ou par collage de préférence, au moins deux bords libres de l'étiquette (ou bien deux parties de celle-ci, par exemple deux petites zones - dites ponctuelles - de l'étiquette situées au voisinage de bords libres de celle-ci), par exemple dans une configuration bord à bord ou bien avec une zone de recouvrement des bords libres, puis à déposer l'étiquette ainsi préformée sur une empreinte mâle (ou poinçon) du moule.

En d'autres termes l'invention consiste à proposer un procédé de fabrication par moulage selon la revendication 1 d'un récipient équipé d'une étiquette d'habillage du récipient qui est roulée avant d'être introduite dans le moule, caractérisé en ce que on stabilise l'étiquette à sa forme définitive ou bien à une forme (non plane) intermédiaire, par exemple à une forme roulée en cylindre ou en tronc de cône, en solidarisant (de préférence en collant ou en soudant) au moins deux parties de l'étiquette entre elles, puis on engage l'étiquette formée ou préformée (par exemple roulée) stabilisée autour d'une empreinte mâle (ou poinçon) du moule, puis on rapproche le poinçon de la matrice, le poinçon servant de support de l'étiquette, et on injecte la matière plastique.

Le procédé selon la revendication 1 est caractérisé en ce que on transfère et on dépose l'étiquette formée sur l'empreinte mâle par des moyens mobiles de préhension pneumatique par contact sur la face externe de l'étiquette formée, et en ce que on utilise des étiquettes d'épaisseur inférieure ou égale à 80 microns.

Grâce au fait que l'on dépose l'étiquette sur le poinçon et non dans la matrice, le temps de cycle de fabrication peut être réduit, pour plusieurs raisons, dont les effets peuvent le cas échéant se cumuler :
- il est d'une part possible de déposer l'étiquette en "temps masqué" c'est-à-dire simultanément à l'opération de retrait de la matrice du récipient fabriqué lors d'un cycle de fabrication précédent ;
- il est d'autre part possible de n'engager que partiellement l'étiquette (autour du poinçon) à l'aide d'un premier organe de transfert, et de poursuivre l'opération d'engagement par un deuxième organe de transfert ; cette opération d'engagement final peut consister en un simple mouvement linéaire de translation d'une butée, selon l'axe longitudinal (de révolution pour un poinçon tronconique) du poinçon, pour pousser l'étiquette selon cet axe ; cette opération ne nécessite donc pas d'activer, ni de désactiver des moyens mécaniques, pneumatiques ou électrostatiques de préhension de l'étiquette par l'organe de transfert et/ou de maintien de l'étiquette sur le poinçon ; en outre, le retour (selon un axe de retour) des organes de transfert pour aller saisir une nouvelle étiquette préformée, ne nécessite pas de mouvement de dégagement des organes par rapport au poinçon selon un axe différent de l'axe de retour ;
- Ce gain de temps ainsi qu'un positionnement précis de l'étiquette sur le poinçon sont en outre favorisés par le fait que l'étiquette préformée est plus raide, selon au moins une direction de l'espace, et donc moins sujette à des déformations, que le feuillet à plat formant l'ébauche d'étiquette, c'est-à-dire l'étiquette non préformée et non solidarisée ; grâce à cette raideur "intrinsèque" de l'étiquette formée, qui est plus élevée que la raideur du feuillet d'étiquette à plat (non solidarisée), il devient possible d'utiliser des étiquettes de plus faible épaisseur.

Grâce au fait que l'on peut se passer de moyen électrostatique de maintien de l'étiquette sur le noyau (poinçon), il est possible de déposer l'étiquette préformée sur des empreintes mâles très rapprochées l'une de l'autre d'un moule multi empreintes : cette possibilité est également favorisée par le fait que l'étiquette préformée est de dimension plus réduite (selon au moins une direction de l'espace) que l'ébauche d'étiquette "à plat" ;

En effet, dans le cas de moules multi-empreintes l'espace libre entre deux empreintes juxtaposées et/ou le pas d'écartement entre les empreintes, est généralement inférieur aux dimensions à plat de l'étiquette ; dans ce cas notamment, l'utilisation de forces électrostatiques pour "enrouler" l'étiquette présentée "à plat", autour du poinçon n'est pas envisageable.

Selon des modes préférentiels de réalisation de l'invention :
- on déforme et/ou on plie l'étiquette préformée de manière à l'écraser pour la mettre à plat et à la stocker ainsi écrasée ; on déforme ensuite à nouveau et/ou on ouvre ou bien on expanse, par exemple par soufflage, l'étiquette préalablement formée et écrasée, pour lui redonner une forme proche de sa forme définitive qui lui a été initialement donnée, et la transférer ainsi reformée dans le moule, en la déposant sur le poinçon ;
- en d'autres termes, on stocke à plat et/ou en pile l'étiquette préalablement roulée (ou formée) et solidarisée (par au moins deux zones ou bords) et aplatie, dans un magasin, puis on extrait l'étiquette du magasin, puis on fait passer l'étiquette de la configuration (ou forme) roulée et aplatie à une configuration roulée et non aplatie, de préférence en l'expansant par soufflage ;
- pour transférer l'étiquette dans le moule, on dépose ou on engage, de préférence en partie seulement, l'étiquette préformée (roulée expansée) autour d'un poinçon ou noyau du moule, et on effectue la mise en place finale de l'étiquette autour du poinçon par un organe de poussée (tel qu'un vérin) qui est mobile par rapport à l'organe de transfert (tel qu'un vérin) ; ceci permet de diminuer le temps du cycle total de fabrication du récipient en provocant un déplacement de retour de l'organe (ou des organes) de transfert vers le magasin de préférence selon une seule direction (ou axe) de retour puisqu'un dégagement de l'organe de poussée n'est pas nécessaire ;
- lors de l'opération de formage ou roulage de l'étiquette préalable au stockage à plat de celle-ci, on colle ou on soude 2 bords libres de l'étiquette l'un à l'autre, avec un recouvrement desdits 2 bords libres ou bien sans recouvrement, c'est-à-dire bord à bord,
- on utilise des étiquettes en papier, en polypropylène, en polyéthylène, en PVC ou ABS d'épaisseur inférieure ou égale à 80 microns, par exemple inférieure ou égale 50 microns ;
- le temps total de transfert de l'étiquette d'une position d'attente à l'extérieur du moule jusqu'à la position de mise en place sur le poinçon, incluant le temps de retour, peut être inférieur ou égal à 5 secondes, de préférence inférieur ou égal à 3 secondes, par exemple de l'ordre de 1 à 2 secondes.

Selon un autre aspect, l'invention consiste à proposer un dispositif de fabrication par moulage d'un récipient et d'insertion d'une étiquette d'habillage dans le moule, selon la revendication 8.

Selon des modes préférentiels de réalisation, le dispositif comporte:
- un moyen ou magasin de stockage à plat et/ou en pile d'étiquettes roulées, formées et aplaties ou écrasées, et/ou
- un moyen de remise en forme de préférence par expansion d'une étiquette d'un état (ou forme) roulé et aplati jusqu'à un état (ou forme) roulé et non aplati, et/ou
- un moyen d'expansion de l'étiquette roulée aplatie par soufflage, qui comporte de préférence plusieurs buses d'orientation différentes ;
- alternativement, l'expansion peut être obtenue par le déploiement (radial) d'une structure mécanique articulée, qui repousse par l'intérieur les parois latérales de l'étiquette ;
- le dispositif peut comporter en outre au moins un moyen, tel qu'une ventouse, de préhension pneumatique d'une étiquette par contact sur une face externe de l'étiquette formée expansée ;

le dispositif peut comporter un moyen de transfert du magasin au moule et de pose sur le poinçon, de l'étiquette extraite du magasin et expansée, et de préférence le dispositif comporte un moyen distinct de poussée de l'étiquette préalablement partiellement engagée autour du poinçon ;
le dispositif peut comporter un magasin de stockage en pile équipé d'un moyen permettant l'introduction d'étiquettes (préalablement formées solidarisées et pliées) en partie supérieure de la pile ; le magasin peut être équipé d'un moyen situé en partie inférieure de la pile et permettant l'extraction (de préférence une à une), des étiquettes formées solidarisées et pliées ;
les moyens de transfert de l'étiquette expansée peuvent comporter plusieurs moyens de préhension par contact sur la face externe de l'étiquette, tels que des ventouses.

Les modes préférentiels de mise en oeuvre de l'invention sont décrits dans les revendications dépendantes.

Les avantages procurés par l'invention seront mieux compris au travers de la description suivante qui se réfère aux dessins annexés qui illustrent sans aucun caractère limitatif des modes préférentiel de mise en oeuvre de l'invention.

La figure 1 illustre en vue à plat un morceau de feuillet destiné à constituer une étiquette de forme tronconique telle que celle représentée figure 2 à 4 particulièrement.

La figure 2 illustre en vue en perspective schématique l'étiquette formée en forme de manchon tronconique.

Les figures 3 et 4 illustrent respectivement en vue de profil et en vue de dessus une étiquette conforme à celle de la figure 2 postérieurement à l'opération de solidarisation de ses bords libres et d'écrasement.

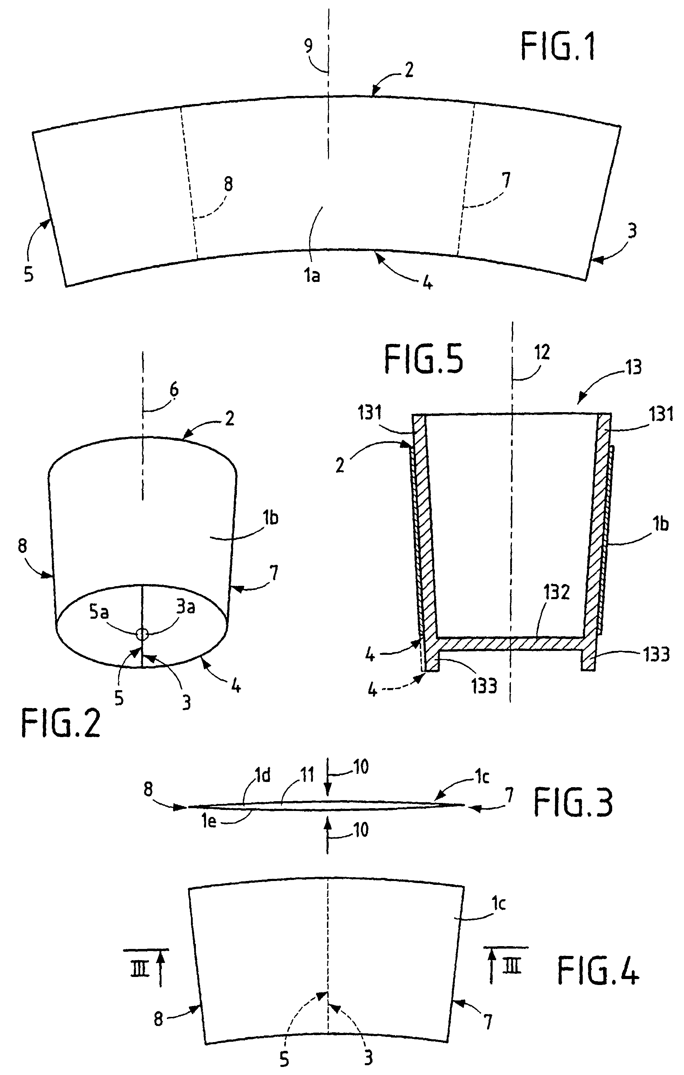

La figure 3 est une vue selon III - III de la figure 4

La figure 5 illustre en vue en coupe par un plan longitudinal un récipient tronconique muni d'un fond et équipé sur sa face externe d'une étiquette épousant la forme tronconique de ses parois latérales.

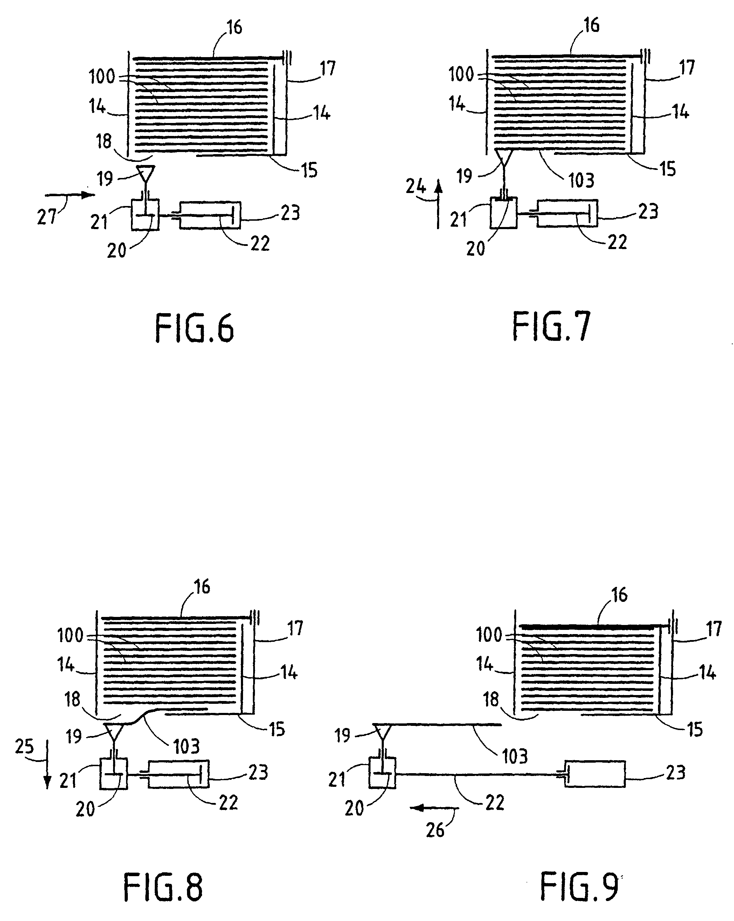

Les figures 6 à 9 illustrent schématiquement, en vue latérale, les étapes successives d'extraction d'une étiquette formée et pliée d'un magasin contenant une pile d'étiquettes identiques.

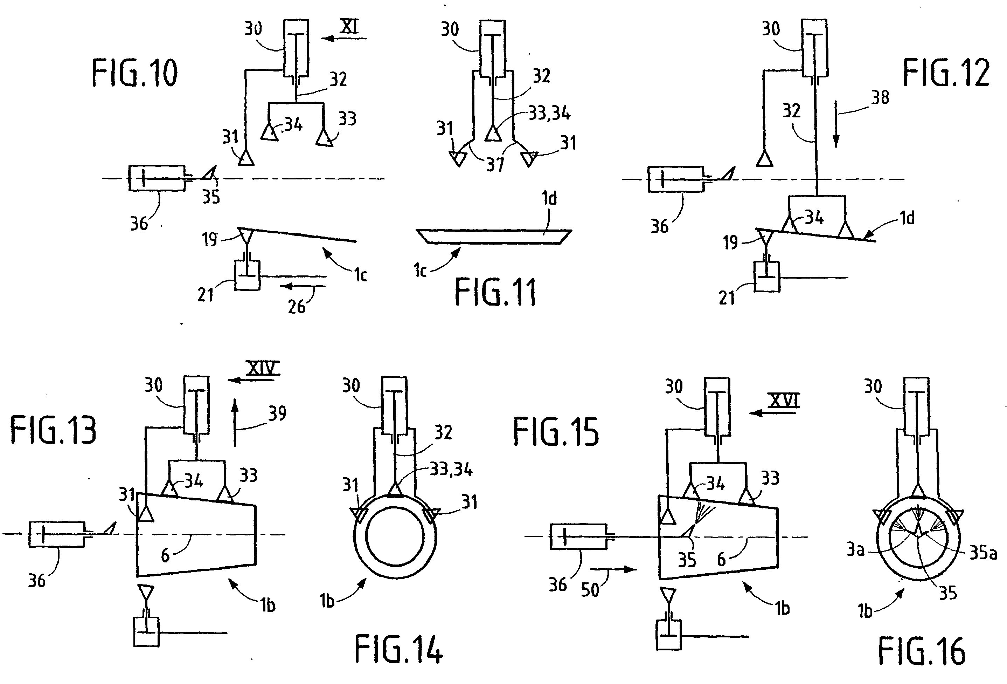

Les figures 10 à 16 illustrent des opérations successives d'expansion d'une étiquette formée, solidarisée, pliée permettant de lui redonner sa forme initiale et/ou définitive ; les figures 11, 14 et 16 sont des vues selon XI, XIV, XVI, des vues 10, 13 et 15 respectivement.

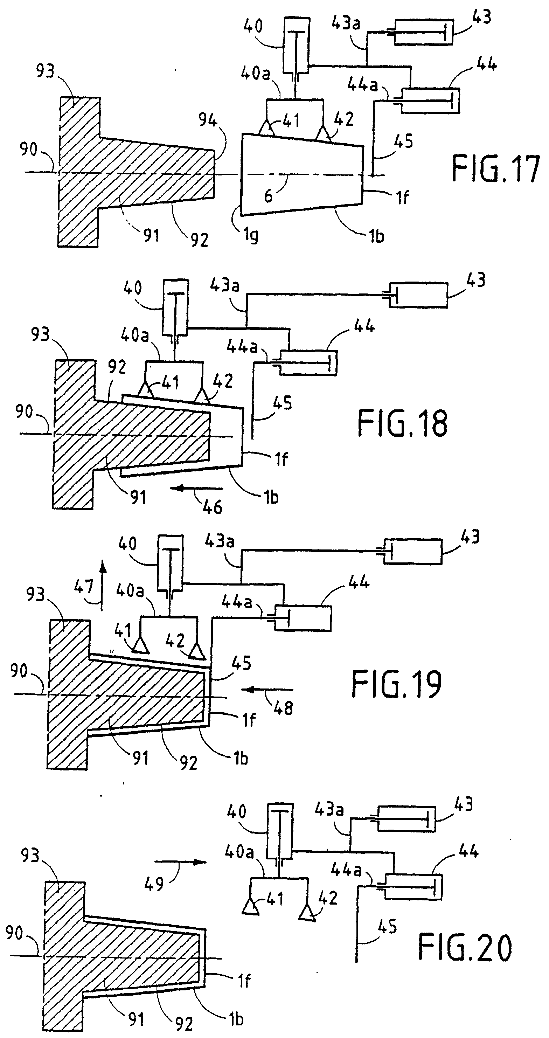

Les figures 17 à 20 illustrent schématiquement en vue latérale une partie des moyens de transfert d'étiquettes expansées dans un dispositif de fabrication de récipient conforme à l'invention permettant l'engagement d'une étiquette expansée autour du noyau d'un moule.

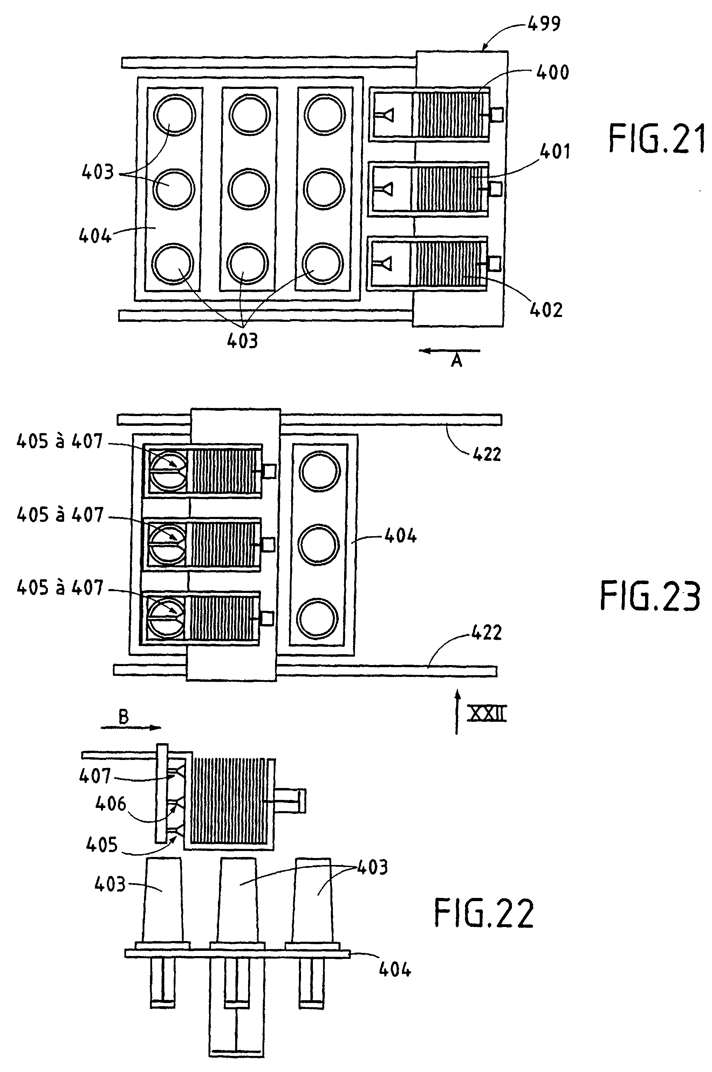

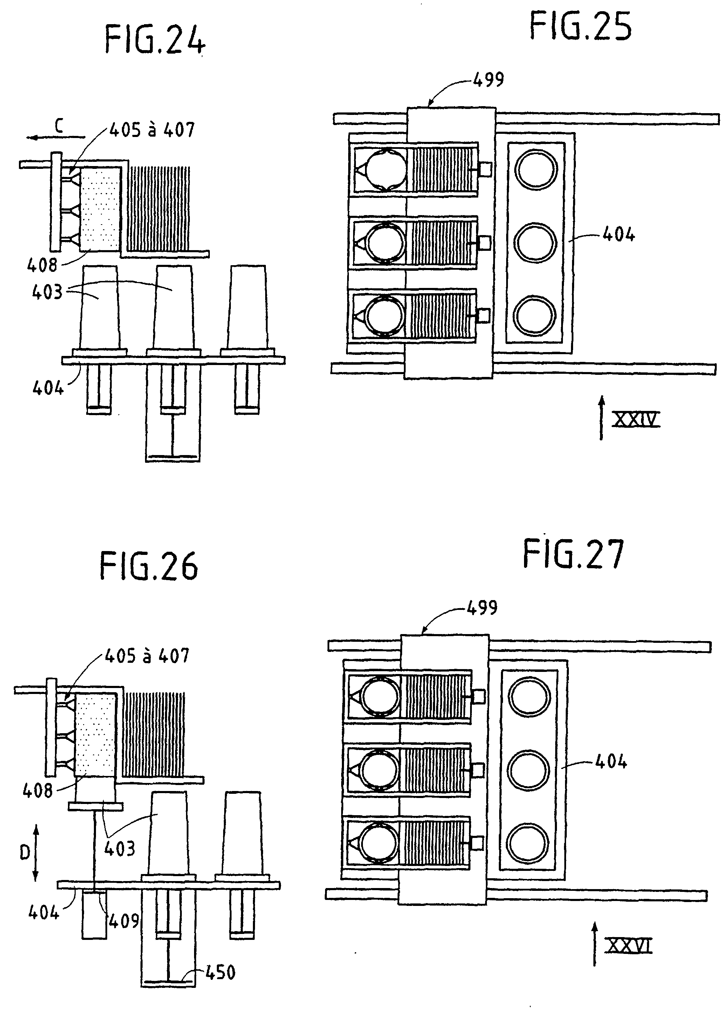

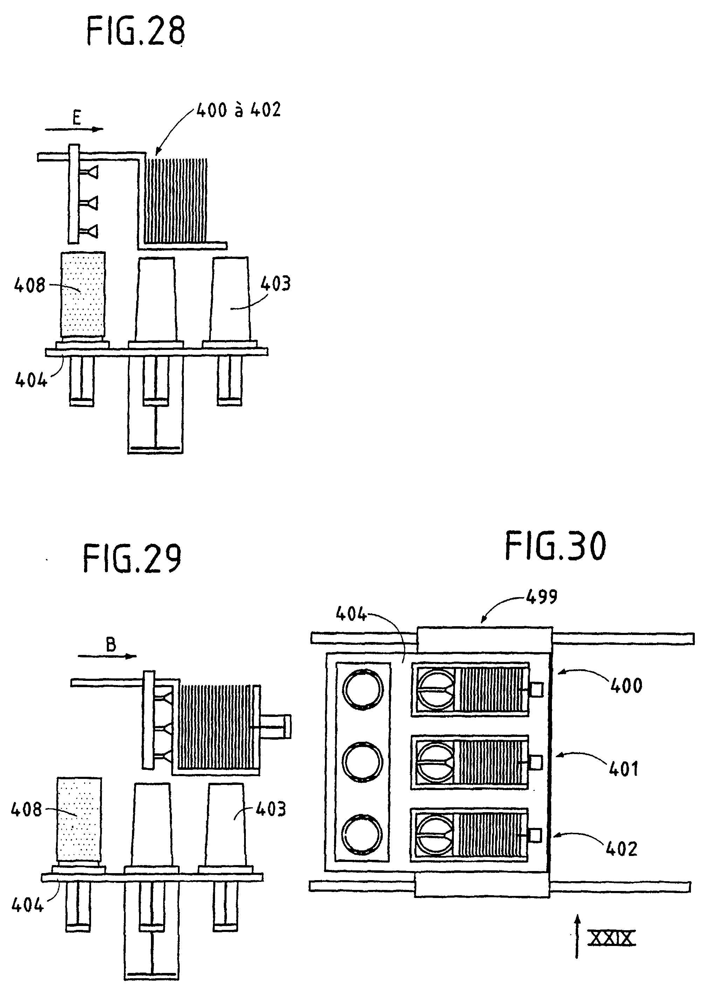

Les figures 21 à 30 illustrent des étapes successives d'extraction simultanée de trois étiquettes d'un magasin, d'expansion de ces étiquettes et de leur dépôt sur un support intermédiaire de transfert ; les figures 21, 23, 25, 27, 30 sont des vues de dessus schématiques du magasin et du support intermédiaire ; les figures 22, 24, 26 et 29 sont des vues latérales schématiques selon XXII, XXIV, XXVI, XXIX des figures 23, 25, 27, 30 respectivement ; la figure 28 est une vue latérale schématique dans une position ou étape intermédiaire entre celles illustrées figures 26 et 29.

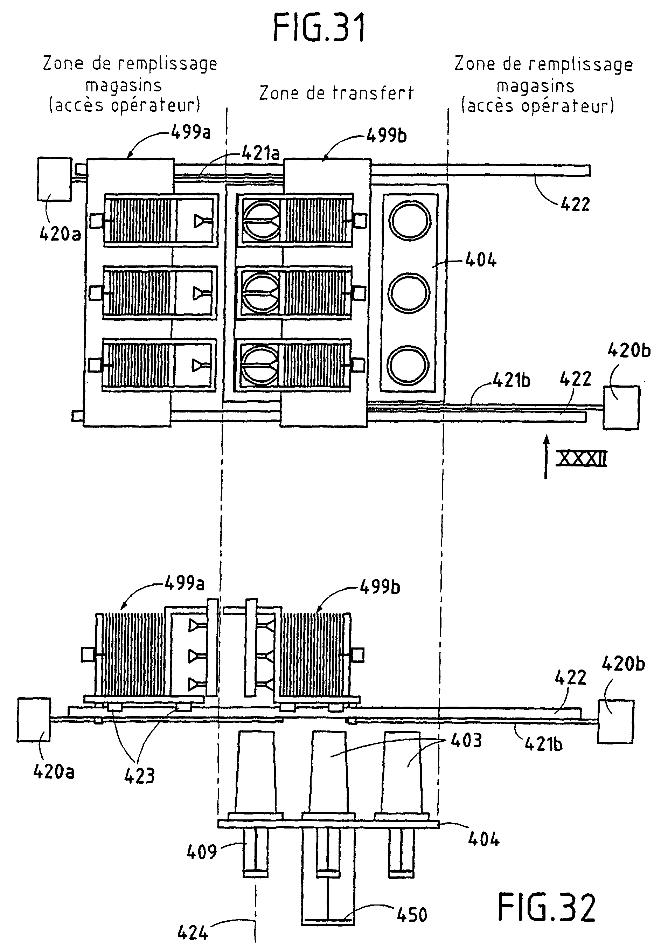

Les figures 31 et 32 illustrent une variante de réalisation des moyens de stockage, de déstockage et de dépôt des étiquettes manchon sur un support temporaire intermédiaire.

La figure 32 est une vue latérale et est une vue selon XXXII de la vue 31 qui est une vue de dessus.

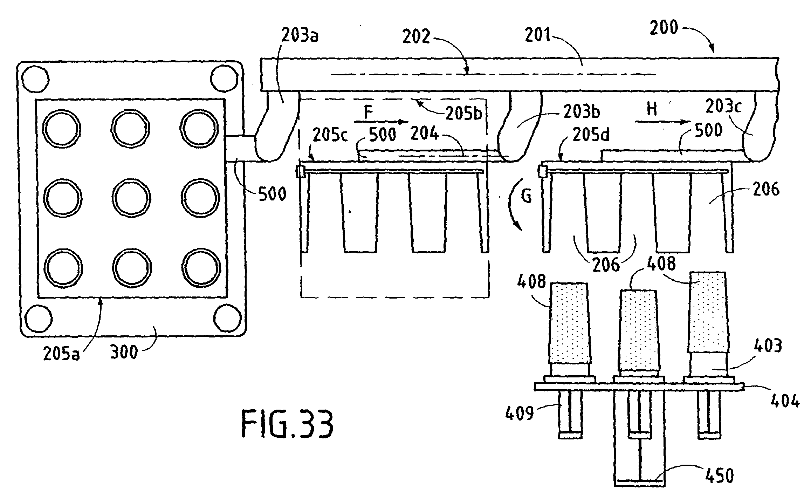

Les figures 33 à 36 illustrent en vue latérale schématique les moyens et les opérations successives de transfert d'étiquettes manchon du support intermédiaire 404 où elles ont été disposées conformément aux opérations décrites en relation avec les figures 21 à 32, jusqu'au moule, par un support mobile de transfert recevant plusieurs étiquettes, permettant de transférer simultanément neuf étiquettes jusqu'au moule.

Par référence aux figures 1 et 4 particulièrement, l'étiquette formée 1b de forme tronconique selon un axe 6 de révolution, est obtenue à partir d'un feuillet 1a découpé selon deux bords 2 et 4 en arc de cercle et selon deux bords 3 et 5 rectilignes symétriques par rapport à un axe 9 sur lequel peuvent être placés les centres des arcs de cercle selon lesquels sont tracés les bords 2 et 4 ; le feuillet 1a déplié ou à plat de la figure 1 a ainsi une forme de quadrilatère curviligne doté d'un axe de symétrie 9.

Par référence à la figure 2 particulièrement, une partie au moins 3a (respectivement 5a) des bords rectilignes 3 et 5 libres du feuillet 1a formant l'ébauche d'étiquette représentée figure 1, peuvent être solidarisées entre elles par collage ou soudage (dans le cas où le feuillet est en matière plastique particulièrement), afin de solidariser les bords libres 3 et 5, dans une configuration bord à bord par exemple ; le rapprochement des bords 3 et 5 du feuillet résulte du roulage de l'ébauche d'étiquette représentée figure 1 jusqu'à obtenir un manchon 1b ou étiquette formée représentée figure 2, de forme tronconique d'axe 6 sur lequel les lignes 7 et 8 représentées en pointillées sur la figure 1 constituent des génératrices de l'étiquette formée tronconique 1b ; les génératrices 7,8 peuvent être les lignes de pliage selon laquelle l'étiquette 1b formée peut être écrasée pour obtenir l'étiquette 1c (représentée figure 3 et 4) après application d'un effort d'écrasement de part et d'autre de l'étiquette selon les flèches 10 ; il en résulte que dans cet état d'étiquette solidarisée, formée et écrasée ou pliée, l'étiquette 1c est essentiellement constituée de deux parties identiques 1d et 1e en regard l'une de l'autre, chaque partie ayant à plat la forme représentée figure 4.

Par référence à la figure 5, l'étiquette dans sa forme représentée figure 2, qui est sensiblement sa forme définitive, est destinée à équiper la face externe des parois latérales 131 d'un récipient 13 de forme tronconique d'axe 12 de révolution qui peut être équipé d'un fond 132, les parois latérales 131 se prolongeant à proximité du fond 132 par des ailettes 133 formant un pied, seule la partie supérieure (située au dessus du fond 132) du récipient 13 étant destiné à recevoir le produit pour lequel est prévu cet emballage. Comme illustré sur cette figure 5, le bord inférieur 4 de l'étiquette 1b peut dans la configuration représentée en traits pleins s'étendre au-dessus du pied 133 de l'emballage 13, ou bien dans la configuration représentée en traits pointillés s'étendre jusqu'au pied 133 de l'emballage.

Par référence aux figures 6 à 9, un magasin de stockage d'étiquettes préalablement formées, solidarisées et pliées qui sont repérées 100, 103, 104, est constitué de parois latérales 14 de préférence verticale, d'une paroi de fond 15, par exemple horizontale et fixe, et d'une paroi 16 supérieure, par exemple pourvue d'un lest, qui est montée coulissante, de préférence verticalement, grâce à la présence d'un guide 17 de coulissement, ceci afin de déplacer vers le bas (au fur et à mesure de l'extraction par la partie basse du magasin de stockage des étiquettes pliées qu'il contient) la pile d'étiquettes 100,104 restant dans celui-ci.

Comme illustré sur ces figures, qui décrivent des opérations successives d'extraction du magasin de l'étiquette 103 formé, pliée, située en partie inférieure de la pile d'étiquettes 100 contenues dans le magasin, une première étape représentée figure 6, consiste en un positionnement en regard d'une ouverture 18 prévue dans la paroi 15 de fond du magasin, d'une ventouse 19 montée à l'extrémité de la tige (ou du piston) 20 d'un vérin 21 de préhension ; ce vérin 21 est monté mobile à l'extrémité de la tige (ou piston) 22 d'un deuxième vérin 23 permettant de déplacer le vérin 21 en translation horizontale selon la flèche 27.

Dans l'opération représentée figure 7, le vérin 21 est actionné de sorte que la ventouse 19 se déplace en translation verticale ascendante selon la flèche 24 jusqu'à venir au contact de la face inférieure de l'étiquette formée, pliée, repérée 103, qui est située à la base de la pile d'étiquettes contenues dans le magasin, et ceci au travers de l'ouverture 18 prévue dans la paroi de fond 15 du magasin.

Dans l'opération représentée schématiquement figure 8, un mouvement inverse suivant la flèche 25 de la ventouse 19 à laquelle adhère l'étiquette 103 située en partie inférieure de la pile, provoque un commencement d'extraction de l'étiquette 103 hors du magasin ; cette extraction est poursuivie par un mouvement de déplacement horizontal suivant la flèche 26 de la tige 22 supportant le vérin 21 jusqu'à extraction totale de l'étiquette 103 formée, pliée.

Cette étiquette peut alors subir les opérations schématiquement représentées aux figures 10 à 16 qui lui sont appliquées successivement pour lui permettre de retrouver par expansion une forme proche de sa forme d'origine (c'est-à-dire avant son pliage) et qui correspond à une forme proche de sa forme définitive lorsqu'elle équipe l'emballage, laquelle forme lui permettra ensuite d'être introduite dans moule par engagement autour du poinçon comme représenté aux figures 17 à 20.

Par référence aux figures 10 à 16, le dispositif conforme à l'invention peut comporter des moyens de déploiement ou expansion d'une étiquette préalablement formée, solidarisée et pliée, de son état plié ou écrasé jusqu'à un état déplié, préalablement à son dépôt sur le noyau du moule.

Par référence aux figures 10 et 11 particulièrement, ces moyens permettant le déploiement ou dépliement de l'étiquette peuvent comporter essentiellement un premier vérin 30 susceptible de déplacer selon un axe vertical et par l'intermédiaire d'une tige 32, une ou plusieurs ventouses 33 et 34 solidaires de la tige 32 ; en outre des ventouses 31 sont rendues solidaires du corps du vérin 30 par deux tiges ou bras 37 dont la partie inférieure est incurvée symétriquement et en fonction de la forme à donner à l'étiquette ; l'étiquette est présentée au poste de déploiement sous sa forme pliée repérée 1c par le vérin 21 (précédemment décrit par référence aux figures précédentes) qui est équipé d'une ventouse 19 à laquelle adhère l'étiquette pliée 1c par sa face inférieure.

Le dispositif comporte en outre des moyens de soufflage 35 de préférence équipés de plusieurs buses 35a par exemple régulièrement réparties et aptes à provoquer de jets d'air radiaux comme illustré figure 16 particulièrement, le long d'un axe suivant lequel le moyen de soufflage 35 peut être déplacé grâce à un vérin 36, lequel axe correspond à l'axe longitudinal 6 de l'étiquette à l'état déployé.

Par référence aux figures 10 et 11, lorsque l'étiquette est présentée devant le poste de déploiement par un mouvement de translation suivant la flèche 26 imprimée par le vérin 21 de transfert, l'étiquette est ainsi présentée en regard des moyens de ventouses 31, 33, 34 ; dans une première étape correspondant à la figure 12, les ventouses 33 et 34 solidaires de la tige 32 sont déplacées suivant un mouvement de translation verticale descendant 38 par le vérin 30 jusqu'à venir au contact de la face supérieure 1d de l'étiquette à l'état écrasé 1c.

Dans l'étape suivante représentée figures 13 et 14, les ventouses 33 et 34 étant rendues solidaires par aspiration de la face supérieure de l'étiquette, sont mues selon un mouvement de retour de la tige 32, c'est-à-dire un mouvement 39 vertical ascendant par le vérin 30, et les ventouses 31 latérales sont activées pour favoriser l'adhérence à celle-ci des parois latérales de l'étiquette 1b qui tend à se déployer sous l'effet de l'effort de traction exercée par les ventouses 34 et 33, les parois de l'étiquette pouvant venir au contact des portions 37 de bras incurvé servant de support aux ventouses 31 latérales ; dans cette étape, la ventouse 19 équipant le vérin 21 est désactivée afin de lâcher la zone d'étiquette à laquelle elle adhérait précédemment.

Dans l'étape suivante correspondant à la représentation des figures 15 et 16, les moyens de soufflage 35 équipés de buses de soufflage d'air 35a sont déplacés suivant la flèche 50 et selon un mouvement par exemple horizontal de translation par le vérin 36, pour venir se positionner sensiblement selon l'axe 6 longitudinal de l'étiquette en partie au moins déployée 1b, à l'intérieur de celle-ci, pour souffler les jets d'air par les orifice 35a et favoriser ou parfaire ainsi le déploiement de l'étiquette, pour que celle-ci reprenne sa forme initiale et/ou définitive, particulièrement sa forme tronconique ou cylindrique d'axe longitudinal 6.

Par référence aux figures 17 à 20, les moyens de transfert conforme à l'invention sont destinés à permettre de positionner et d'engager autour d'une empreinte mâle 91 d'une partie d'un moule 93 formant un poinçon, l'étiquette formée 1b ; dans le mode de réalisation schématique illustré sur ces figures, l'empreinte mâle 91 est de forme tronconique de surface extérieure 92 ayant pour axe de révolution un axe 90, et est terminée par une face avant 94 perpendiculaire à l'axe 90 ; dans la configuration représentée à la figure 17, l'étiquette déployée 1b est amenée en regard de l'empreinte mâle 91 du moule 93, c'est-à-dire de sorte que son axe longitudinal 6 soit sensiblement dans le prolongement de l'axe longitudinal 90 de l'empreinte mâle 91, son extrémité longitudinale la plus grande 1g étant placée au voisinage de la face avant ou extrémité longitudinale 94 de l'empreinte mâle 91.

Le dispositif de transfert comporte un premier vérin 43 susceptible de déplacer parallèlement aux axes 6,90, deux vérins 40 et 44 par l'intermédiaire d'un élément formant une tige ou piston 43a ; le vérin 40 est susceptible de déplacer selon un axe vertical des ventouses 41 et 42 qui sont solidaires de la tige 40a du vérin 40 : cela permet le déplacement des ventouses 41, 42 selon un mouvement radial par référence aux axes longitudinaux 6,90 ; le vérin 44 est susceptible de déplacer une butée 45 rendue solidaire de la tige 44a du vérin 44, selon un mouvement de translation parallèle aux axes 6,90.

Dans une première étape de transfert, les moyens de transfert représentés figure 17 supportant l'étiquette 1b formée, solidarisée, déployée sont déplacés par des moyens traditionnels non représentés de sorte que l'étiquette 1b soutenue par les ventouses 41, 42 solidaires de la tige 40a, soit placée dans le prolongement, (en face) de l'empreinte mâle 91 sur laquelle elle doit être déposée.

Dans l'étape suivante correspondant à la figure 18, le vérin 43 est activé pour provoquer un déplacement suivant la flèche 46 des vérins 40, 44 et corrélativement de l'étiquette 1b tenue par les ventouses 41, 42, c'est-à-dire un déplacement axial selon l'axe commun 6,90 de l'étiquette et de l'empreinte mâle 91 du poinçon, jusqu'à un engagement partiel au moins de l'étiquette autour du poinçon comme représenté sur cette figure.

A l'étape suivante correspondant à la figure 19, les ventouses 41 et 42 sont désactivées et sont rétractées radialement selon la flèche 47 sous l'effet du vérin 40, tandis que l'étiquette 1b est engagée plus complètement autour de l'empreinte mâle 91 du noyau par action du vérin 44 déplaçant selon la flèche 48 la butée 45, par contact (et appuie) de celle-ci avec l'extrémité longitudinale arrière if de l'étiquette 1b.

Dans l'étape finale de dégagement illustrée figure 20, l'étiquette 1b déployée étant déposée et complément engagée sur l'empreinte mâle 91, les moyens de transfert 43, 40, 44 particulièrement sont dégagés selon la flèche 49 jusqu'à une position dans laquelle ils peuvent être déplacés pour aller saisir une nouvelle étiquette.

Bien qu'il soit préférable de stocker l'étiquette sous la forme écrasée (pliée) illustrée figures 3 et 4, il peut dans certains cas être envisagé de stocker des étiquettes tronconiques sous leur forme dite définitive (c'est-à-dire déployée) illustrée figure 2.

Les figures 21 à 30 illustrent des opérations successives de déstockage des étiquettes en forme de tube ou de manchon écrasé ou aplati, hors de trois magasins, les opérations d'expansion des étiquettes et de pose sur un support intermédiaire qui est équipé de neuf organes coniques aptes à recevoir chacun un manchon ou tube.

Le chariot 499 sur lequel sont fixés les magasins 400, 401, 402, se déplace (flèche A figure 21) vers la première rangée (à gauche) de cônes 403 d'axe vertical, de mise en forme, équipant le support intermédiaire 404 en forme de plaque carrée.

Les trois préhenseurs pneumatiques 405, 406, 407 équipant chacun des magasins 400, 401, 402, sont actionnés pour prendre un tube aplati du magasin, lors du déplacement selon la flèche B figure 22.

Les préhenseurs reviennent (flèche C figure 24) à leur position d'origine tout en maintenant le vide, ce qui provoque l'expansion des trois manchons 408.

Trois cônes 403 de préformage sont amenés (flèche D figure 26) à l'intérieur des trois manchons 408 respectivement disposés dans le prolongement de chacun des trois cônes, par action d'un vérin 409 équipant le support 404.

La mise sous vide des préhenseurs 405 à 407 pneumatiques (ventouses) est arrêtée, et la rangée des trois cônes de préformage revient, sous l'action du vérin 409, à sa position d'origine, chaque cône 403 de la rangée portant un manchon 408.

Le chariot 499 sur lequel sont fixés les magasins, se déplace (flèche E figure 28) vers une autre rangée de cônes de mise en forme et un nouveau cycle de préhension et de déstockage de tubes et de mise en forme recommence par des mouvements successifs selon les flèches B figure 29, puis C figure 24, D figure 26 et E figure 28.

Dans la variante de réalisation du dispositif de déstockage et de mise en forme d'étiquettes illustré figures 31 et 32, une zone de transfert central est équipée du support intermédiaire de transfert 404 muni des cônes 403, et de part et d'autre de cette zone de transfert, est prévue une zone de remplissage de magasin accessible à un opérateur.

Par référence à ces figures 31 et 32, chacun des deux chariots 499a et 499b est respectivement mû par un moteur 420a, 420b, entraînant en rotation une vis sans fin 421a, 421b, chaque chariot 499 se déplaçant sur des glissières 422 par l'intermédiaire de patins 423.

Comme illustré figure 32 particulièrement, les structures coniques 403 équipant le support 404 peuvent être montées mobiles par rapport à la plaque 404 par le vérin 409, selon une translation selon l'axe vertical 424 comme décrit précédemment, et également selon une rotation selon ledit axe 424, ce qui permet dans ce cas par rotation de la forme conique 403, d'orienter l'étiquette en forme de manchon posée sur cette structure 403, afin que la soudure de l'étiquette soit disposée dans une position angulaire prédéterminée.

Par référence aux figures 33 à 36, les moyens mobiles de transfert de plusieurs étiquettes comportent un robot 200 muni d'une poutre ou bras 201 d'axe longitudinal 202, par exemple horizontal, laquelle poutre 201 supporte un bras 203 mobile en translation selon ledit axe 202, lequel bras 203 porte un deuxième bras 500 qui est monté mobile par rapport au bras 203b selon un axe 204 horizontal, par exemple parallèle à l'axe 202 ; le deuxième bras 500 reçoit une plaque support 205 munie de neuf alvéoles, qui sert à transférer neuf étiquettes en forme de manchon, du support intermédiaire 404 où elles ont été disposées conformément aux étapes décrites ci-dessus, jusqu'au moule équipant la presse 300 d'injection ; à la figure 33, trois positions correspondant à des étapes successives de déplacement sont illustrées : dans la position du bras 203 repéré 203a, celui-ci supporte la plaque 205 dans une position où elle est en regard des empreintes mâle et femelle du moule équipant la presse 300 ; par un mouvement de translation selon la flèche F, ce bras 203 se déplace jusqu'à la position repérée 203b, dans laquelle par une rotation repérée par la flèche G selon l'axe 204, la plaque passe de la position 205b à la position 205c selon une rotation de 90° ; une translation ultérieure selon la flèche H amène le bras 203 dans la position repérée 203c dans laquelle la plaque 205 repérée 205d, est en regard du support intermédiaire 404 portant les neuf manchons 408 à transférer dans le moule équipé de neuf poinçons et matrices.

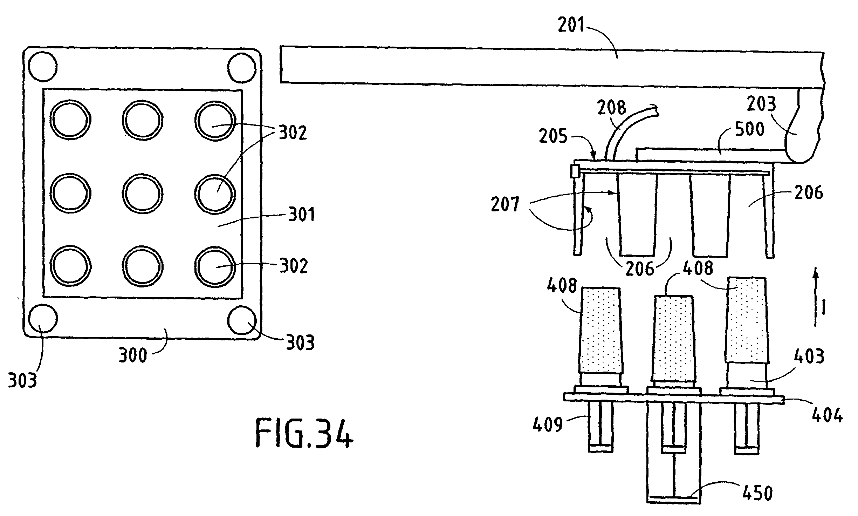

A cet effet, comme illustré particulièrement en figure 34, la plaque 205d est munie d'alvéoles ou cavités 206, dont les parois 207 ont une forme susceptible d'épouser sensiblement la forme externe d'une étiquette en forme de manchon, lesquelles parois 207 peuvent être mises en dépression grâce à une source de vide reliée à la plaque 205d par une canalisation 208 schématiquement et partiellement représentée.

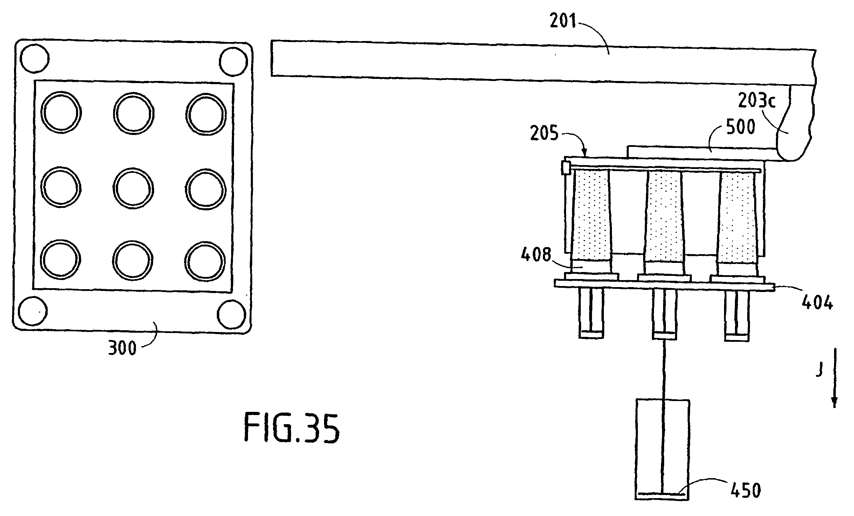

Dans l'opération suivante, le support intermédiaire 404 et les manchons 408 qu'il porte, se déplacent verticalement selon la flèche I sous l'action du vérin 450 jusqu'à ce que les manchons 408 soient logés dans les cavités 206 de la plaque 205d, ce qui correspond à la position illustrée figure 35 ; la mise en dépression des parois 207 est activée pour assurer le maintien des étiquettes dans les alvéoles 206.

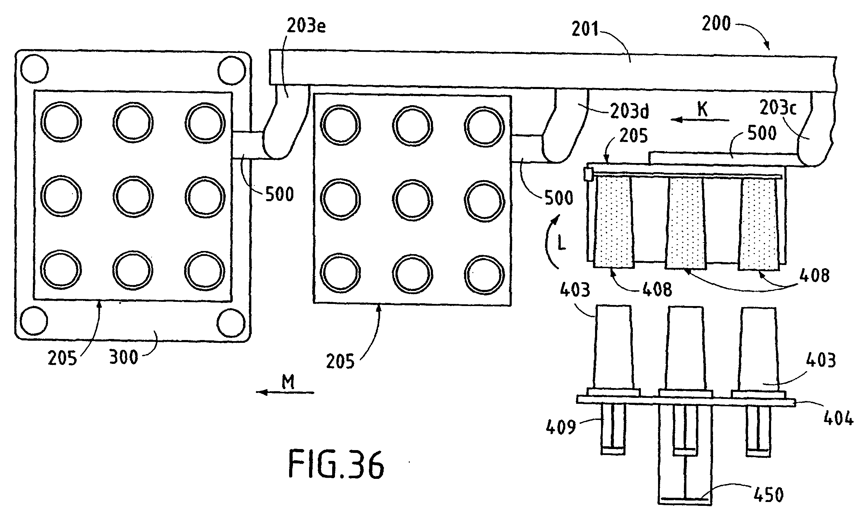

Consécutivement, un mouvement selon la flèche J figure 35 du support 404 sous l'action du vérin 450, amène le support 404 dans la position illustrée figure 36 ; dans cet état, la plaque 205 est ensuite déplacée par les bras 203 et 500 qui la soutiennent selon les flèches K, L et M successivement, le bras 203 passant successivement des positions repérées 203c à 203d puis 203e sur cette figure 36, c'est-à-dire selon des mouvements inverses de ceux illustrés schématiquement figure 33 ; ceci permet de transférer simultanément les neuf étiquettes en forme de manchon maintenues pneumatiquement sur la plaque alvéolée 205 et jusqu'à les positionner en regard des poinçons 302 du moule 301 situé dans la presse 300 équipée des colonnes 303.

La structure de stockage de transfert comportant le magasin mobile 499, les préhenseurs 405 à 407, le support intermédiaire 403, 404 et la plaque alvéolée 205, a notamment pour avantage d'être utilisable avec tous types de robots 200 existants dans le commerce.

## Revendications

1. Procédé de moulage par injection d'un récipient (13) équipé d'une étiquette (1b) d'habillage qui est introduite dans le moule (93) avant injection, dans lequel on forme l'étiquette et on solidarise au moins deux bords de l'étiquette, et dans lequel on transfère l'étiquette formée sur une empreinte mâle (91) du moule par des moyens mobiles, **caractérisé en ce que** on transfère et on dépose l'étiquette formée sur ladite empreinte mâle (91) par des moyens (40 à 45, 205) mobiles de préhension pneumatique par contact sur une face externe de l'étiquette formée, et **en ce que** on utilise des étiquettes d'épaisseur inférieure ou égale à 80 microns.

2. Procédé suivant la revendication 1 dans lequel on utilise des étiquettes d'épaisseur inférieure ou égale à 50 microns.

3. Procédé suivant la revendication 1 ou 2 dans lequel :
- on stocke à plat et/ou en pile l'étiquette (1c, 100,103,104) préalablement formée, solidarisée et aplatie, dans un magasin, puis
- on extrait l'étiquette du magasin, puis
- on fait passer l'étiquette de la configuration aplatie (1c) à une configuration non aplatie (1b), avant de la transférer dans le moule.

4. Procédé selon l'une quelconque des revendications 1 à 3, dans lequel on transfère simultanément plusieurs étiquettes par lesdits moyens mobiles de préhension.

5. Procédé suivant l'une quelconque des revendications 1 à 4 dans lequel, pour transférer l'étiquette dans le moule, on engage en partie l'étiquette formée (1b) et expansée autour d'un poinçon du moule, puis on effectue la mise en place finale de l'étiquette autour du poinçon par un organe (45) de poussée.

6. Procédé selon l'une quelconque des revendications 1 à 5 dans lequel, lors de l'opération de formage ou roulage de l'étiquette, on colle ou on soude deux zones ou parties de bords (3,5) libres de l'étiquette l'une à l'autre.

7. Procédé selon l'une quelconque des revendications 1 à 6 dans lequel on utilise des étiquettes en papier ou en polypropylène.

8. Dispositif de moulage par injection d'un récipient (13) et d'insertion d'une étiquette d'habillage dans le moule (93), qui comporte des moyens mobiles de transfert et de dépôt sur une empreinte mâle (91) du moule, d'une étiquette préformée (1b) dont deux zones ou bords ont été préalablement solidarisés l'un à l'autre, **caractérisé en ce que** lesdits moyens mobiles de transfert et de dépôt sur ladite empreinte mâle (91) comportent des moyens (40 à 45, 205) mobiles de préhension pneumatique par contact sur une face externe de l'étiquette formée de sorte que l'on peut utiliser des étiquettes d'épaisseur inférieure ou égale à 80 microns.

9. Dispositif selon la revendication 8 qui comporte en outre :
- un magasin (14,15,16) de stockage à plat ou en pile d'étiquettes formées et aplaties,
- un moyen de remise en forme d'une étiquette d'un état (1c) formé et aplati jusqu'à un état (1b) formé et non aplati.

10. Dispositif selon la revendication 8 ou 9 qui comporte un moyen (35) d'expansion de l'étiquette formée et aplatie.

11. Dispositif suivant l'une quelconque des revendications 8 à 10 dans lequel lesdits moyens mobiles de préhension pneumatique comportent un support (205) mobile de transfert équipé de plusieurs (au moins trois) organes (206) de maintien d'une étiquette (408) formée, expansée, pour transférer simultanément plusieurs étiquettes dans un moule multi-empreintes.

12. Dispositif selon la revendication 11 dans lequel ledit support (205) mobile de transfert d'étiquettes comporte plusieurs alvéoles ou cavités (206) identiques apte à recevoir chacune une partie substantielle de l'étiquette (408) expansée.

13. Dispositif suivant la revendication 12 dans lequel le support (205) mobile de transfert est déplaçable par un robot (201, 203) selon au moins deux axes : une translation et une rotation, en particulier selon trois axes.

14. Dispositif selon l'une quelconque des revendications 8 à 13, qui comporte :
- un moyen d'engagement partiel sur le poinçon de l'étiquette expansée,
- un moyen (45) de poussée de l'étiquette préalablement partiellement engagée autour du poinçon (91,93).

## Claims

1. A method of injection molding a receptacle (13) fitted with a covering label (1b) which is inserted into the mold (93) prior to injection, in which the label is shaped and at least two edges of the label are joined together, and in which the shaped label is transferred onto a male portion (91) of the mold by moving means, the method being **characterized in that** the shaped label is transferred and deposited on said male portion (91) by moving means (40 to 45, 205) for gripping the shaped label pneumatically by contact on an outside face thereof, and **in that** labels are used having a thickness of not more than 80 microns.

2. A method according to claim 1, in which labels are used having a thickness that is less than or equal to 50 microns.

3. A method according to claim 1 or 2, in which:
. the previously-shaped, joined-together, and flattened labels (1c, 100, 103, 104) are stored flat and/or in a stack in a magazine; then
. a label is extracted from the magazine; then;
. the label is changed from its flattened configuration (1c) to a non-flattened configuration (1b) prior to being transferred into the mold.

4. A method according to any one of claims 1 to 3, in which a plurality of labels are transferred simultaneously by said moving gripping means.

5. A method according to any one of claims 1 to 4, in which, to transfer a label into the mold, a portion of the shaped and expanded label (1b) is engaged around a mold core, and then the label is put finally into place around the core by a thrust member (45).

6. A method according to any one of claims 1 to 5, in which, during the operation of shaping or rolling the label, two zones or portions of the free edges (3, 5) of the label are stuck or heat-sealed together.

7. A method according to any one of claims 1 to 6, in which labels made of paper or of polypropylene are used.

8. Apparatus for injection molding a receptacle (13) and for inserting a covering label into the mold (93), the apparatus including moving transfer means for transferring a pre-shaped label (1b) whose two zones or edges have previously been joined together and for depositing it on a male portion (91) of the mold, the apparatus being **characterized in that** said moving means for transferring and depositing the label on said male portion (91) include moving means (40 to 45, 205) for gripping the shaped label pneumatically by contact on an outside face thereof, in such a manner that labels may be used having a thickness of not more than 80 microns.

9. Apparatus according to claim 8, further comprising:
. a magazine (14, 15, 16) for storing shaped and flattened labels flat or in a stack; and
. means for putting a label back into shape from a shaped and flattened state (1c) to a shaped and non-flattened state (1b).

10. Apparatus according to claim 8 or 9, having means (35) for expanding a shaped and flattened label.

11. Apparatus according to any one of claims 8 to 10, in which said moving pneumatic gripping means comprise a moving transfer support (205) fitted with a plurality (at least three) means (206) for holding a shaped and expanded label (408) for transferring a plurality of labels simultaneously into a multi-cavity mold.

12. Apparatus according to claim 11, in which said moving support (205) for transferring labels comprises a plurality of identical cells or cavities (206) each suitable for receiving a substantial portion of an expanded label (408).

13. Apparatus according to claim 12, in which the moving transfer support (205) is movable by a robot (201, 203) relative to at least two axes: one in translation and one in rotation, in particular relative to three axes.

14. Apparatus according to any one of claims 8 to 13, comprising:
. means for engaging an expanded label in part on a core; and
. thrust means (45) for pushing on a label that has previously been engaged in part on the core (91, 93).

## Patentansprüche

1. Verfahren zum Spritzgießen eines Behälter (13), der mit einem Verpackungsetikett (1b) versehen ist, das vor dem Spritzvorgang in die Gussform (93) eingelegt wird, bei dem das Etikett geformt wird und wenigstens zwei Ränder des Etiketts miteinander verbunden werden und bei dem das geformte Etikett mit beweglichen Mitteln auf einen Formstempel (91) transportiert wird,
**dadurch gekennzeichnet, dass** das geformte Etikett mit beweglichen, pneumatischen Greifmitteln (40 bis 45, 205) in Kontakt mit einer Außenseite des geformten Etiketts auf den Formstempel (91) transportiert und darauf abgelegt wird, und dass Etiketten mit einer Dicke von kleiner oder gleich 80 Mikrometern verwendet werden.

2. Verfahren nach Anspruch 1,
bei dem Etiketten mit einer Dicke von kleiner oder gleich 50 Mikrometern verwendet werden.

3. Verfahren nach Anspruch 1 oder 2, bei dem
- das vorher geformte, verbundene und flachgedrückte Etikett (1c, 100, 103, 104) in einem Lager flachliegend und/oder übereinander liegend aufbewahrt wird, anschließend
- das Etikett aus dem Lager entnommen wird, anschließend
- das Etikett von einer flachgedrückten Form (1c) in eine nicht flachgedrückte Form (1b) gebracht wird, bevor es in die Gussform transportiert wird.

4. Verfahren nach einem der Ansprüche 1 bis 3,
bei dem gleichzeitig mehrere Etiketten mit den beweglichen Greifmitteln transportiert werden.

5. Verfahren nach einem der Ansprüche 1 bis 4,
bei dem zum Transportieren des Etiketts in die Gussform das geformte, geweitete Etikett (1b) zum Teil um einen Formstempel herum aufgesetzt wird, und das Etikett anschließend durch ein Schiebemittel (45) um den Formstempel herum endgültig angebracht wird.

6. Verfahren nach einem der Ansprüche 1 bis 5,
bei dem beim Formen oder Rollen des Etikettes zwei Bereiche oder Teile der freien Ränder (3, 5) des Etiketts aneinander geklebt oder verschweißt werden.

7. Verfahren nach einem der Ansprüche 1 bis 6,
bei dem Etiketten aus Papier oder Polypropylen verwendet werden.

8. Vorrichtung zum Spritzgießen eines Behälters (13) und zum Einlegen eines Verpackungsetiketts in die Gussform (93), die bewegliche Mittel umfasst, um ein vorgeformtes Etikett (1b), dessen beide Bereiche oder Ränder vorher miteinander verbunden worden sind, auf einen Formstempel (91) zu transportieren und abzulegen,
**dadurch gekennzeichnet, dass** die beweglichen Mittel zum Transportieren und Ablegen auf dem Formstempel (91) bewegliche, pneumatische Greifmittel in Kontakt mit einer Außenseite des geformten Etiketts umfassen, so dass Etiketten mit einer Dicke von kleiner oder gleich 80 Mikrometern verwendet werden können.

9. Vorrichtung nach Anspruch 8,
die zudem umfasst:
- ein Lager (14, 15, 16) zum flachliegenden oder übereinander liegenden Aufbewahren von geformten und flachgedrückten Etiketten,
- ein Mittel, um ein Etikett von einem geformten, flachgedrückten Zustand (1c) in einen geformten, nicht flachgedrückten Zustand (1b) zu bringen.

10. Vorrichtung nach Anspruch 8 oder 9,
die ein Mittel (35) zum Weiten des geformten, flachgedrückten Etikettes umfasst.

11. Vorrichtung nach einem der Ansprüche 8 bis 10,
bei der die beweglichen pneumatischen Greifmittel einen beweglichen Transporthalter (205) umfassen, der mit mehreren (wenigstens drei) Einrichtungen (206) zum Halten eines geformten, geweiteten Etiketts (408) versehen ist, um gleichzeitig mehrere Etiketten in eine Mehrfachform zu transportieren.

12. Vorrichtung nach Anspruch 11,
bei der der bewegliche Halter (205) zum Transport der Etiketten mehrere identische Zellen oder Ausbuchtungen (206) aufweist, die jeweils einen wesentlichen Teil des geweiteten Etiketts (408) aufzunehmen vermögen.

13. Vorrichtung nach Anspruch 12,
bei der der bewegliche Transporthalter (205) durch einen Roboter (201, 203) mit einer Translations- und einer Drehbewegung entlang wenigstens zwei Achsen, und insbesondere entlang drei Achsen verschiebbar ist.

14. Vorrichtung nach einem der Ansprüche 8 bis 13,
die umfasst:
- ein Mittel zum teilweisen Aufsetzen des geweiteten Etiketts auf den Formstempel,
- ein Mittel (45) zum Schieben des vorher bereits teilweise um den Formstempel (91, 93) aufgesetzten Etiketts.
